**Europäisches Patentamt**

**European Patent Office**

**Office européen des brevets**

(19)

(11) Veröffentlichungsnummer: **0 029 835**
**B1**

(12) ## EUROPÄISCHE PATENTSCHRIFT

(45) Veröffentlichungstag der Patentschrift:
**12.10.83**

(51) Int. Cl.³: **F 02 G 5/02,** F 01 N 3/04,
F 28 D 7/10

(21) Anmeldenummer: **80901006.9**

(22) Anmeldetag: **24.05.80**

(86) Internationale Anmeldenummer:
**PCT/DE 80/00079**

(87) Internationale Veröffentlichungsnummer:
**WO 80/02726 (11.12.80** Gazette 80/28)

(54) **AUSPUFFANLAGE FÜR BRENNKRAFTMASCHINEN ALS ANTRIEB EINER WÄRMEPUMPENANLAGE.**

(30) Priorität: **05.06.79 DE 2922808**
**11.01.80 DE 3000878**

(43) Veröffentlichungstag der Anmeldung:
**10.06.81 Patentblatt 81/23**

(45) Bekanntmachung des Hinweises auf die Patenterteilung:
**12.10.83 Patentblatt 83/41**

(84) Benannte Vertragsstaaten:
**AT CH DE FR GB LI NL SE**

(56) Entgegenhaltungen:

**DE-A-2 530 503**
**DE-A-2 711 212**
**DE-A-2 744 615**
**DE-A-2 745 995**
**GB-A-1 303 336**
**US-A-2 341 319**
**US-A-3 802 491**

(73) Patentinhaber: **CREDE, Helfried, Fuchsbichl 9b,**
**D-8021 Icking (DE)**

(72) Erfinder: **CREDE, Helfried, Fuchsbichl 9b, D-8021 Icking**
**(DE)**

(74) Vertreter: **Zipse + Habersack, Kemnatenstrasse 49,**
**D-8000 München 19 (DE)**

ACTORUM AG

## Auspuffanlage für Brennkraftmaschinen als Antrieb einer Wärmepumpenanlage

Die Erfindung betrifft eine Auspuffanlage von Verbrennungskraftmaschinen, insbesondere eines Dieselmotors als Antrieb eines Kältemittel-Kompressors in einer Wärmepumpenanlage, mit einem Trennwand-Wärmetauscher zur Überführung von Abgaswärme in einen Heizungskreislauf.

Für den Antrieb von Kältemittel-Kompressoren in Wärmepumpenanlagen können z.B. Dieselmotoren verwendet werden. Für die Erwärmung des Heizungswassers kann dann nicht nur die im Verflüssiger des Kältemittelkreislaufes gewonnene Kondensationswärme benutzt werden, sondern auch die Wärme aus den Motor-Abgasen, welche eine Temperatur von ca. 500°C haben. Die Übertragung der Wärme von den Motor-Abgasen auf das Heizungswasser kann sinnvoll nur im Trennwand-Wärmetausch-Verfahren erfolgen, z.B. im Gegenstromverfahren durch einen Wärmetauscher aus konzentrischen Doppelrohren. Ein solcher Wärmetauscher wird ziemlich voluminös, wenn die Motor-Abgase von ca. 500°C auf ca. 80°C abgekühlt werden sollen, bei einer durchschnittlichen Kühlwassertemperatur von 50°C.

Ein aus konzentrischen Doppelrohren aufgebauter Wärmetauscher, insbesondere zum Erwärmen von Heizöl, ist beispielsweise aus der US-A 2 341 319 bekannt. Dieser Wärmetauscher besitzt ein in ein weites äusseres Rohr eingesetztes engeres inneres Rohr, das an seinen Enden zur dichten Anlage am äusseren Rohr erweitert ist. Das zu erwärmende Fluid fliesst durch das erweiterte Ende durch das innere Rohr, um am erweiterten anderen Ende wieder auszutreten. Ist dieses Fluid Heizöl, so kann beim Eintritt in das enge innere Rohr keine Komprimierung zwecks Temperaturerhöhung stattfinden. Dass eine solche Komprimierung gar nicht beabsichtigt ist und auch selbst bei einem gasförmigen Fluid nicht eintreten könnte, zeigt die Tatsache, dass das Fluid zunächst durch einen wesentlich engeren Querschnitt als es der innere Rohrquerschnitt ist, in eine Endkappe des Wärmetauschers eintritt.

Wegen des hochfrequenten Wackelns des Dieselmotors (was im Prinzip auch für jede andere Verbrennungskraftmaschine gilt), ist es erforderlich, den voluminösen Wärmetauscher über eine elastische Leitungsverbindung an den Dieselmotor anzuschliessen. Elastische Schläuche halten aber entweder der Temperatur nicht Stand oder sind der fortwährenden mechanischen Belastung durch die Motorschwingungen nicht gewachsen. Bei den meisten Materialien ist beides der Fall. Das bei Kraftfahrzeugen verwendete Verfahren, wonach die Auspuffgase unmittelbar nach dem Austritt aus den Ventilen unter Absenkung der Temperatur adiabatisch expandieren, ist unerwünscht, wenn zur Nutzung der Abwärme die Motor-Abgase auf möglichst hoher Temperatur zu halten sind, um einen bestmöglichen Wärmetausch zu ermöglichen, der bekanntlich um so effektiver abläuft, je höher die Temperaturdifferenz zwischen den beiden in Wärmetausch stehenden Medien ist.

Der Erfindung liegt die Aufgabe zugrunde bei einer Auspuffanlage mit einem Trennwand-Wärmetauscher zur Überführung von Abgaswärme in einen Heizungskreislauf die sich aus der Schwingungs- und Temperaturbelastung der elastischen Verbindung von Verbrennungskraftmaschine und Auspuffanlage ergebenden Probleme zu lösen, unter Beachtung der allgemeinen Anforderungen an eine Auspuffanlage in bezug auf Schalldämpfung.

Die gestellte Aufgabe wird erfindungsgemäss mit einer Auspuffanlage nach dem Anspruch 1 gelöst.

Nach der Erfindung ist ein erstes Teilstück der Auspuffanlage, das als Trennwand-Wärmetauscher ausgebildet ist, starr, d,h, ohne elastische Leitungsverbindung, an die Verbrennungskraftmaschine angeflanscht. Dies setzt einen klein bauenden Trennwand-Wärmetauscher mit nichtsdestotrotz hohem Wärmeübergang voraus. Eine kleine Baugrösse wird durch folgende Massnahmen ermöglicht: unmittelbar nach dem Auspuffgas-Sammelrohr wird die Auspuffleitung innerhalb des starr angeflanschten ersten Teilstücks der Auspuffanlage z.B. auf ein Viertel ihres vorherigen Querschnitts reduziert. Dabei ist die so verkleinerte Auspuffleitung das Innere von zwei konzentrischen Rohren. Das äussere grosse Rohr wird von Kühlwasser, im Falle einer Wärmepumpe also von Heizungswasser, durchflossen. An der Eintrittsstelle in den reduzierten Leitungsteil erhöht sich die Temperatur der Abgase von ca. 500°C auf ca. 900°C bei gleichzeitigem Druckanstieg. Die Leitungslänge innerhalb des Trennwand-Wärmetauschers wird so gewählt, dass am Ende des reduzierten Teiles die Abgastemperatur noch ca. 200°C beträgt. Am Ende des reduzierten Teiles wird die Leitung wieder auf den ursprünglichen normalen Querschnitt erweitert, so dass die Gase an dieser Stelle adiabatisch expandieren können. Die Temperatur sinkt dabei in jedem Fall unter 100°C, so dass anschliessend ein zweites Teilstück der Auspuffanlage gefahrlos durch ein Elastomer-Zwischenstück z.B. auf Kautschukbasis angeschlossen werden kann. Ein solches zweites Teilstück der Auspuffanlage kann wie im Falle einer Wärmepumpenanlage gemäss der DE-A 2 744 615 ein langes Rohrstück sein, das in Trennwand-Wärmetausch mit einem als Wärmequelle für den Verdampfer der Wärmepumpenanlage dienenden Wasserspeicher gebracht wird, dem auch Wärme durch umgebende Wärmequellen zugeführt wird und der auf einem niedrigen Temperaturniveau nahe 0°C steht, um einerseits die kondensierbaren Anteile in den Motorabgasen zu kondensieren und Schadstoffe in gebildetem Kondensat zu lösen und andererseits Abgaswärme bis zu relativ niedrigem Temperaturniveau in den Wasserspeicher zu überführen.

Die Erhöhung des Wärmeübergangs durch die oben beschriebene Reduzierung des Abgas-Durchtrittsquerschnitts in der Auspuffleitung kann wie folgt erklärt werden: eine Erhöhung des Wärmeübergangs ist zunächst durch die wesentlich erhöhte Temperatur der Abgase bedingt, d.h. durch die erhöhte Temperaturdifferenz zwischen den beiden in Wärmetausch stehenden Medien Abgase-Kühlwasser. Fördernd auf den Wärmeübergang wirken sich ferner die erhöhte Gasdichte der Abgase aus. Besonders stark beeinflusst wird die Effektivität des Wärmetauschvorgangs vom Ausmass der Turbulenzen der in Wärmetausch stehenden Medien im Bereich der Trennwand. Turbulenzfördernd sind dabei die Erhöhung der Strömungsgeschwindigkeit und des Temperaturgradienten durch die Verringerung des Abgas-Durchtrittsquerschnitts auf z.B. 25 % der normalen Querschnittsfläche. Auch die Übertragung der Motorschwingungen auf den Trennwand-Wärmetauscher dürfte turbulenzfördernd wirken. Hemmend auf den Wärmeübergang wirkt sich dagegen die gegenüber einer normalen Auspuffleitung verringerte Rohroberfläche aus. Im Ergebnis konnte mit einer erfindungsgemässen Auspuffanlage bei einer Reduzierung des Abgas-Durchtrittsquerschnitts auf ein Viertel der normalen Querschnittsfläche die erforderliche Leitungslänge auf etwa ein Viertel der vorherigen Länge verkürzt werden, wobei die sich einstellende Endtemperatur der Abgase sogar niedriger lag als bei nichtreduzierten Leitungsrohren.

Die erfindungsgemässe Auspuffanlage erzielt in gleichem Umfang eine Schalldämpfng wie eine herkömmliche Auspuffanlage. Unmittelbar hinter den Motorventilen entsteht durch die beschriebene Querschnittsverengung ein Staudruck in der Auspuffleitung, der das für das Entstehen des Auspuffkanals verantwortliche Druckgefälle erheblich reduziert. Ferner sorgen die intensiven Turbulenzen innerhalb der Auspuffleitung für Effekte, welche nach Prinzip und Wirkung denjenigen in den Verwirbelungskammern eines Kraftfahrzeug-Schalldämpfers entsprechen.

Mit der Verwendung der erfindungsgemässen Auspuffanlage ist zweifellos ein erhöhter spezifischer Treibstoffverbrauch verbunden. Der erhöhte Treibstoffverbrauch bewirkt eine höhere Wärmeabgabe über die Motorabwärme und die Auspuffgase, was jedoch im Falle einer Wärmepumpe zumindest nicht unerwünscht ist.

Es hat sich gezeigt, dass dort, wo die Abgasleitung mit verengtem Durchtrittsquerschnitt in den Trennwand-Wärmetauscher eintritt, Korrosionserscheinungen auftreten und zu einer Leckage führen können. Durch das Leck kann dann Heizungswasser durch die Abgasleitung bis in den Verbrennungsraum der Verbrennungskraftmaschine eindringen und diese beschädigen oder sogar zerstören. Anfänglich geringes Leckwasser wird, solange die Verbrennungskraftmaschine in Betrieb ist, durch den Auspuff hinaus verdampft werden, muss aber bei einem darauffolgenden Stillstand der Verbrennungskraftmaschine entdeckt werden, um ein Wiederinbetriebsetzen der Verbrennungskraftmaschine und grössere Schäden durch ein sich ausweitendes Leck zu verhindern.

Um zu verhindern, dass im Falle einer Leckage Wasser in den Verbrennungsraum der Verbrennungskraftmaschine eintritt, können mehrere Massnahmen, einzeln oder in Kombination getroffen werden. In jedem Fall wird es zweckmässig sein, die Abgasleitung, in Abgasströmungsrichtung gesehen, stromaufwärts einer möglichen Leckstelle von der Verbrennungskraftmaschine aus abfallend zu installieren. Damit kann in die Abgasleitung eindringendes Wasser nicht zum Verbrennungsraum vordringen, sondern es wird zum Auspuffende abfliessen. Sollte so viel Heizungswasser in die Abgabeleitung eindringen, dass es den gesamten Durchtrittsquerschnitt ausfüllt, so würden die Abgase zurückgehalten und die Verbrennungskraftmaschine stirbt ab. Um sicherzustellen, dass nicht zu viel Wasser durch ein Leck in die Abgasleitung dringen kann, wird es zweckmässig sein, zumindest in der Zulaufleitung des Wärmetauscher-Auspuffrohrs, möglicherweise aber auch in der Ablaufleitung ein Ventil vorzusehen, welche im Falle einer Leckage die genannten Leitungen verschliessen. Das Schliessen der Ventile kann immer mit dem Stillsetzen der Verbrennungskraftmaschine erfolgen oder durch einen gesonderten Leckagemelder gesteuert werden.

Vorteilhaft schliesst an die Abgasleitung ein dünnes Rohr als Drainage-Leitung an, die während des Betriebs der Verbrennungskraftmaschine durch ein Ventil geschlossen gehalten wird und somit keine Abgase austreten lässt. Das Ventil öffnet sich bei Abschalten der Verbrennungskraftmaschine, so dass evtl. durch ein Leck eingedrungenes Wasser nach unten abfliessen könnte. Ein ausserhalb des Ventils in die Drainage-Leitung eingebauter, an sich bekannter Wasser-Detektor stellt eingedrungenes Wasser und damit das Vorhandensein eines Lecks fest. Durch geeignete Schaltung kann man dann erreichen, dass die Verbrennungskraftmaschine nicht mehr anspringt und/oder, dass dieser Störfall durch einen Warnton oder ein Lichtsignal angezeigt wird. Damit der Wasser-Detektor in jedem Fall bei einer Leckage anspricht, ist es erforderlich, dass die Drainage-Leitung an einer tiefen Stelle der Abgasleitung anschliesst, damit Leckwasser als erstes in die Drainage-Leitung gelangt.

Für den Fall, dass das Ventil in der Drainage-Leitung versagt und auch während des Betriebs der Verbrennungskraftmaschine offen bleibt, ist nahe des Ausgangs der Drainage-Leitung im Aufstellungsraum der Verbrennungskraftmaschine ein Kohlenoxid-Wächter installiert, der austretende Abgase ermittelt und bewirkt, dass die Verbrennungskraftmaschine abschaltet, wenn ein bestimmter Kohlenoxidgehalt in der Luft überschritten wird.

Der Wasser-Detektor und das Schliessventil der Drainage-Leitung müssen weit von der Abgasleitung entfernt sein, damit eine Beschädigung durch die hohe Temperatur vermieden wird. Einen gewissen Kühleffekt bringt eine grössere Leitungslänge, die untergebracht werden kann, indem die Drainage-Leitung bis zum Schliessventil spiralförmig geführt wird. Allerdings soll die Temperatur in der Drainage-Leitung bis zum Schliessventil nicht so stark absinken, dass Wasseranteile in den Abgasen kondensieren und sich somit Kondenswasser in der Drainage-Leitung ansammelt.

Tritt während des Betriebs der Verbrennungskraftmaschine ein Leck auf, so wird in die Abgasleitung eindringendes Heizungswasser zunächst verdampfen und zum Auspuffende abgeführt. Indem die Abgasleitung von der Verbrennungskraftmaschine zum Wärmetauscher hin abfällt, ist zusätzlich ein Pufferraum geschaffen, der in jedem Fall auch bei grösseren Leckwassermengen verhindert, dass Wasser bis zum Verbrennungsraum der Verbrennungskraftmaschine vordringen kann. Bei einem anschliessenden Stillstand der Verbrennungskraftmaschine, der das Öffnen des Schliessventils in der Drainage-Leitung zur Folge hat, kann eindringendes Heizungswasser durch die Drainage-Leitung abfliessen, wo es vom Wasser-Detektor ermittelt wird. Durch den Wasser-Detektor werden die Ventile im Heizungswasserzu- und -ablauf des Wärmetauschers geschlossen, so dass maximal die einer Füllung entsprechende Wassermenge durch das Leck aus dem Wärmetauscher austreten kann. Gesteuert durch den Wasser-Detektor wird ebenfalls das Wiederanspringen der Verbrennungskraftmaschine verhindert.

Tritt das Leck beim Stillstand der Verbrennungskraftmaschine auf, so kann das austretende Wasser direkt durch die dann geöffnete Drainage-Leitung abströmen. Die Ventile im Heizungswasserzu- und -ablauf sind bereits geschlossen. Der Wasser-Detektor verhindert ein Wiederanspringen der Verbrennungskraftmaschine.

Die Erfindung wird nachfolgend anhand beigefügter Zeichnungen näher erläutert. Es zeigen:

Fig. 1 schematisch einen Längsschnitt einer erfindungsgemässen Auspuffanlage,

Fig. 2 eine erfindungsgemässe Auspuffanlage mit Sicherheitseinrichtung.

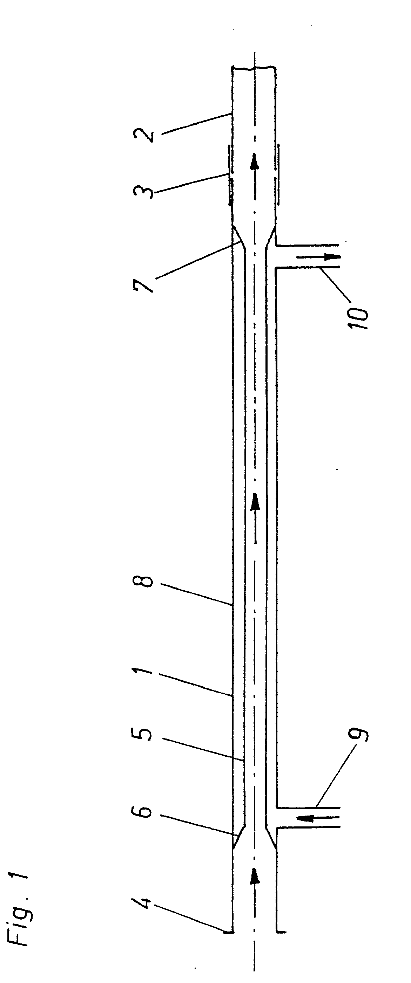

Die in Fig. 1 dargestellte Auspuffanlage weist ein als Trennwand-Wärmetauscher ausgebildetes erstes Teilstück 1 sowie ein zweites Teilstück 2 auf, die durch ein Elastomer-Zwischenstück 3 miteinander verbunden sind. Innerhalb des ersten Teilstücks 1, das mittels eines Flansches 4 starr an das (nicht gezeigte) Auspuffgas-Sammelrohr einer Verbrennungskraftmaschine anflanschbar ist, werden die Auspuffgase auf eine Temperatur von ca. 80 bis 100°C heruntergekühlt, d.h. auf eine Temperatur, welcher das Elastomer-Zwischenstück 3 unbeschadet standhält. Damit der Wärmeübergang von den Auspuffgasen in das Kühlmedium mit hoher Effizienz stattfindet und somit das starr angeflanschte erste Teilstück 1 der Auspuffanlage kurz und leicht baut, ist die Auspuffleitung 5 zwischen einem Einlauftrichter 6 und einem Auslauftrichter 7 auf etwa ein Viertel ihres vorherigen Querschnitts verengt. Aufgrund dieser Querschnittsverengung findet eine Kompression der Auspuffgase und eine Erhöhung von deren Temperatur von ca. 500 bis 600°C auf etwa 900°C statt.

Die in ihrem Querschnitt verengte Auspuffleitung 5 ist zwischen dem Einlauftrichter 6 und dem Auslauftrichter 7 von einem äusseren Rohr 8 mit einem Einlaufstutzen 9 und einem Auslaufstutzen 10 für das Kühlmedium umgeben. Bei Verwendung der Auspuffanlage für einen Dieselmotor als Antrieb eines Kältemittel-Kompressors in einer Wärmepumpenanlage ist das Kühlmedium Heizungswasser mit einer Temperatur zwischen 40 und 60°C. Die Länge des äusseren Rohrs 8 und der inneren Auspuffleitung 5 sind so bemessen, dass die Auspuffgase vor dem Auslauftrichter 7 auf eine Temperatur von ca. 200°C heruntergekühlt sind. Durch die Expansion im Auslauftrichter 7 auf die ursprüngliche Querschnittsfläche erfolgt eine Temperaturabsenkung auf ca. 80 bis 100°C.

Das als Trennwand-Wärmetauscher ausgebildete erste Teilstück 1 der Auspuffanlage kann, wie dargestellt, geradlinig verlaufen. Zur Verringerung der Baulänge kann es jedoch zweckmässig sein, die zwei konzentrischen Rohre 5 und 8 in mehreren Windungen zu führen. Es kann auch vorteilhaft sein, das Teilstück 1 der Auspuffanlage in Form z.B. vier paralleler Doppelrohre in rechteckig-kubischer Anordnung auszubilden, so dass es leicht im selben Volumen unterzubringen ist, das ein normaler Auspufftopf ohne Wärmetauscherfunktion einnimmt.

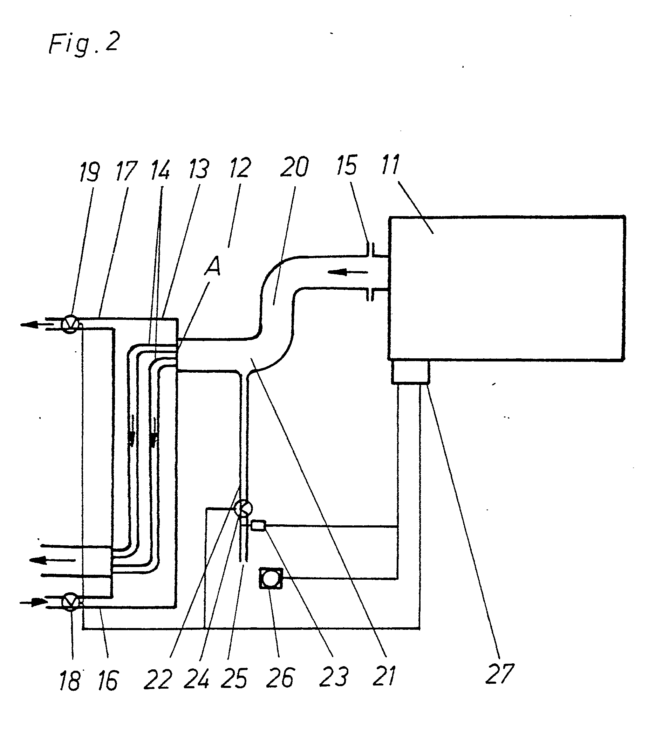

In Fig. 2 stellen 11 die Verbrennungskraftmaschine und 12 die Auspuffanlage dar. Die Auspuffanlage 12 weist ein als Trennwand-Wärmetauscher 13 ausgebildetes Auspuffrohr auf, das durch die Abgasleitung 14 bei 15 an die Verbrennungskraftmaschine 1 angeflanscht ist. Innerhalb des Trennwand-Wärmetauschers 13 ist die Abgasleitung 14 mit verengtem Durchtrittsquerschnitt geführt. Am Wärmetauscher 13 münden eine Heizungswasserzulaufleitung 16 und eine Heizungswasserablaufleitung 17, in die jeweils ein Magnetventil 18 bzw. 19 eingebaut ist.

Obwohl es in Fig. 2 nicht dargestellt ist, ist auch bei dieser Ausführungsform ein zweites Teilstück der Auspuffanlage durch ein elastisches Zwischenstück mit dem erweiterten Ende des ersten Teilstücks verbunden.

Die korrosionsgefährdete Stelle liegt bei A an der Verengung der Abgasleitung 14 beim Eintritt in den Wärmetauscher 13.

In der Abgasleitung 14 befindet sich, in Abgasströmungsrichtung gesehen, stromaufwärts des Wärmetauschers 13 und der korrosionsgefährdeten Stelle A ein im wesentlichen senkrechtes Leitungsstück 20, das ein Zurückfliessen von Leckagewasser in den Verbrennungsraum der Verbrennungskraftmaschine 11 verhindert. Im Boden des sich anschliessenden horizontalen Leitungsstücks 21 der Abgasleitung 14 schliesst eine spiralförmig geführte Drainage-Leitung 22 an, in deren Ende ein Magnetventil 24 und anschliessend ein Wasser-Detektor 23 installiert sind.

Nahe dem Ausgang 25 der Drainage-Leitung 22 befindet sich im Aufstellungsraum der Verbrennungskraftmaschine ein Kohlenoxid-Wächter 26.

Der Wasser-Detektor 23 und der Kohlenoxid-Wächter 26 sind mit einem Steuergerät 27 der Verbrennungskraftmaschine 11 verbunden, um bei Ansprechen die Verbrennungskraftmaschine ausser Betrieb zu setzen oder ihr Wiederanspringen zu verhindern. Das Steuergerät 27 beaufschlagt die Magnetventile 18 und 19 des Wärmetauschers 13 sowie das Magnetventil 24 der Drainage-Leitung 22 derart, dass bei Abschalten der Verbrennungskraftmaschine 11 die Magnetventile 18 und 19 geschlossen werden und das Magnetventil 24 geöffnet wird. Bei Inbetriebnahme der Verbrennungskraftmaschine 11 werden dagegen die Magnetventile 18 und 19 geöffnet, während das Magnetventil 24 schliesst.

**Patentansprüche**

1. Auspuffanlage von Verbrennungskraftmaschinen, insbesondere eines Dieselmotors als Antrieb eines Kältemittel-Kompressors in einer Wärmepumpenanlage, mit einem Trennwand-Wärmetauscher zur Überführung von Abgaswärme in einen Heizungskreislauf, dadurch gekennzeichnet, dass ein an die Verbrennungskraftmaschine starr anzuflanschendes erstes Teilstück (1) der Auspuffanlage als Trennwand-Wärmetauscher ausgebildet ist, innerhalb dem eine Auspuffleitung (5) einen solchermassen verengten Abgas-Durchtrittsquerschnitt aufweist, dass die Abgase eine hohe Temperatur nahe ihrer Verbrennungstemperatur haben, dass anschliessend an den Trennwand-Wärmetauscher der Abgas-Durchtrittsquerschnitt zur Absenkung der Abgastemperatur erweitert ist, und dass ein zweites Teilstück (2) der Auspuffanlage durch ein elastisches Zwischenstück (3) mit dem erweiterten Ende des ersten Teilstücks verbunden ist.

2. Auspuffanlage nach Anspruch 1, dadurch gekennzeichnet, dass das erste Teilstück (1) der Auspuffanlage an das Auspuffgas-Sammelrohr der Verbrennungskraftmaschine anflanschbar ist und zwei konzentrische Rohre (5, 8) aufweist, von denen das innere Rohr (5) mit einem gegenüber dem Auspuffgas-Sammelrohr verengten Querschnitt von den Abgasen und das äussere Rohr (8) von Kühlwasser durchströmt wird.

3. Auspuffanlage nach Anspruch 2, dadurch gekennzeichnet, dass das innere Rohr (5) mit einem Einlauftrichter (6) und einem Auslauftrichter (7) in das äussere Rohr (8) eingesetzt ist.

4. Auspuffanlage nach Anspruch 2 oder 3, dadurch gekennzeichnet, dass das innere Rohr auf etwa ein Viertel des vorherigen Querschnitts reduziert ist.

5. Auspuffanlage nach einem der Ansprüche 2 bis 4, dadurch gekennzeichnet, dass die zwei konzentrischen Rohre (5, 8) in mehreren Windungen geführt sind.

6. Auspuffanlage nach Anspruch 1, gekennzeichnet durch eine Sicherheitseinrichtung (18-27) zum Verhindern des Eindringens von Wärmetauschmedium, wie Heizungswasser, durch die Abgasleitung (14) in die Verbrennungskraftmaschine (11) und zum Ausserbetriebsetzen bzw. Ausserbetriebhalten der Verbrennungskraftmaschine im Falle einer Leckage.

7. Auspuffanlage nach Anspruch 6, dadurch gekennzeichnet, dass in der Zu- und/oder Ablaufleitung (16, 17) des Wärmetauschers (13) ein Ventil (18, 19) angeordnet ist, das im Falle einer Leckage das Nachfliessen von Wärmetauschmedium unterbindet.

8. Auspuffanlage nach Anspruch 6 oder 7, dadurch gekennzeichnet, dass die Abgasleitung (14), in Abgasströmungsrichtung gesehen, stromaufwärts einer möglichen Leckstelle (A) zumindest einen von der Verbrennungskraftmaschine (11) abfallenden Rohrabschnitt (20) aufweist.

9. Auspuffanlage nach einem der Ansprüche 6 bis 8, dadurch gekennzeichnet, dass an einer tiefen Stelle (21) der Abgasleitung (14) eine Drainage-Leitung (22) anschliesst, die während des Betriebs der Verbrennungskraftmaschine (11) durch ein Ventil (24) geschlossen gehalten ist, das bei Abschalten der Verbrennungskraftmaschine öffnet.

10. Auspuffanlage nach Anspruch 9, dadurch gekennzeichnet, dass in die Drainage-Leitung (22) ausserhalb des Ventils (24) ein Detektor (23) für eingedrungenes Wärmetauschmedium eingebaut ist, der bei Feststellen von eingedrungenem Wärmetauschmedium ein Wiederinbetriebsetzen der Verbrennungskraftmaschine (11) verhindert und/oder ein Warnsignal auslöst.

11. Auspuffanlage nach Anspruch 9 oder 10, dadurch gekennzeichnet, dass die Drainage-Leitung (22) bis zum Ventil (24) spiralförmig geführt ist.

12. Auspuffanlage nach einem der Ansprüche 9 bis 11, dadurch gekennzeichnet, dass nahe dem Ausgang (25) der Drainage-Leitung (22) im Aufstellungsraum der Verbrennungskraftmaschine (11) ein Kohlenoxid-Wächter (26) installiert ist.

**Claims**

1. Exhaust installation for internal combustion engines, particularly for a diesel engine which serves as the driving means of a refrigerant-compressor in a heat pump installation, with a partition wall — heat exchanger for transferring exhaust gas heat to a heating circuiti, characterised in that a first component part (1) of the exhaust installation is formed as a partition wall — heat exchanger within which an exhaust pipe (5) has an exhaust gas flow passage cross-section which is constricted in such a manner that the exhaust gases have a high temperature in the vicinity of their combustion temperature, that adjacent the partition wall — heat exchanger the exhaust gas flow passage cross-section is enlarged so as to reduce the exhaust gas temperature and that a second component part (2) of the exhaust installation is connected by a resiliently flexible intermediate member (3) to the enlarged end of the first component part.

2. Exhaust installation according to claim 1, characterised in that the first component part (1) of the exhaust installation can be connected by a flanged joint to the exhaust manifold of the internal combustion engine and comprises two concentric tubes (5, 8) of which the inner tube (5), which has a reduced cross-section compared with the exhaust manifold, is traversed by exhaust gases ad the outer tube (8) is traversed by cooling water.

3. Exhaust installation according to claim 2, characterised in that the inner tube (5) is fitted into the outer tube (8) with the aid of an inlet funnel (6) and an outlet funnel (7).

4. Exhaust installation according to claim 2 or 3, characterised in that the inner tube is reduced to about a quarter of the preceding cross-section.

5. Exhaust installation according to one of claims 2 or 3, characterised in that the two concentric tubes (5, 8) extend in a plurality of convolutions.

6. Exhaust installation according to claim 1, characterised by a safety arrangement (18, 27) for preventing the penetration of heat-exchange medium, such as heating water, through the exhaust gas pipe (14) into the internal combustion engine (11) and for putting or keeping the internal combustion engine out of operation in the event of a leakage.

7. Exhaust installation according to claim 6, characterised in that a valve (18, 19) is arranged in the intake or outflow pipe (16, 17) of the heat exchanger (13), which valve prevents the continued flow of heat exchange medium in the event of a leakage.

8. Exhaust installation according to claim 6 or 7, characterised in that the exhaust gas pipe (14), as seen in the direction of flow of the exhaust gas, has on the upstream side of a possible leakage position (A) at least one pipe section (20) extending downwardly from the internal combustion engine (11).

9. Exhaust installation according to one of claims 6 to 8, characterised in that a drain pipe (22) is connected to the exhaust gas pipe (14) at a low down position (21) thereon, this drain pipe being kept closed while the internal combustion engine (11) is in operation by a valve (24) which opens only when the internal combustion engine is switched off.

10. Exhaust installation according to claim 9, characterised in that a detector (23) for detecting the penetration of heat exchange medium is arranged in the drain pipe (22) outside the valve (24), which detector prevents restarting of the internal combustion engine (11) and/or emits a warning signal when the leakage of heat exchange medium is detected.

11. Exhaust installation according to claim 9 or 10, characterised in that the drain pipe (22) extends helically as far as the valve (24).

12. Exhaust installation according to one of claims 9 to 10, characterised in that a carbon monoxide detector (26) is installed near the output (25) of the drain pipe (22) within the space in which the internal combustion engine (11) is mounted.

**Revendications**

1. Dispositif d'échappement de moteurs à combustion interne, en particulier d'un moteur Diesel, servant à entraîner un compresseur de frigorigène dans une installation de pompe de chaleur, munie d'un échangeur thermique de cloison pour le transfert de chaleur des gaz d'échappement dans un circuit de chauffage, caractérisé en ce qu'un premier tronçon (1) de l'installation d'échappement est conçu sous forme d'échangeur thermique de paroi à l'intérieur duquel un tuyau d'échappement (5) présente une section de passage de gaz d'échappement rétrécie de telle sorte que les gas d'échappement ont une haute température voisine de leur température de combustion, en ce qu'à la suite de l'échangeur thermique de cloison la section de passage des gaz d'échappement est élargie pour abaisser la température des gaz d'échappement, et en ce qu'un deuxième tronçon (2) de l'installation d'échappement est relié par un tronçon intermédiaire élastique (3) à l'extrémité élargie du premier tronçon.

2. Dispositif d'échappement selon la revendication 1, caractérisé en ce que le premier tronçon (1) de l'installation d'échappement peut être raccordé par bride au tube collecteur de gaz d'échappement du moteur à combustion interne et présente deux tubes concentriques (5, 8), dont le tube intérieur présentant une section rétrécie relativement au tube collecteur de gaz d'échappement est parcouru par les gaz d'échappement et le tube extérieur (8) par de l'eau de refroidissement.

3. Dispositif d'échappement selon la revendication 2, caractérisé en ce que le tube intérieur (5) est inséré dans le tube extérieur (8) par un entonnoir d'entrée (6) et un entonnoir de sortie (7).

4. Dispositif d'échappement selon la revendication 2 ou 3, caractérisé en ce que le tube intérieur est réduit à peu près à un quart de la section précédente.

5. Dispositif d'échappement selon les revendications 2 à 4, caractérisé en ce que les deux tubes concentriques (5, 8) décrivent plusieurs spires.

6. Dispositif d'échappement selon la revendication 1, caractérisé par un dispositif de sécurité (18 à 27) servant à empêcher la pénétration de milieu d'échange thermique, tel que de l'eau de chauffage, dans le moteur à combustion interne (11) par le tuyau à gaz d'échappement (14), et à mettre hors-service ou à maintenir hors-service le moteur à combustion interne en cas de fuite.

7. Dispositif d'échappement selon la revendication 6, caractérisé en ce que dans le tuyau d'arrivée et/ou d'évacuation (16, 17) de l'échangeur thermique (13) est disposée une valve (18, 19) qui, en cas de fuite, empêche le milieu d'échange thermique de continuer à affluer.

8. Dispositif d'échappement selon la revendication 6 ou 7, caractérisé en ce que le tuyau à gaz d'échappement (14), vu dans le sens d'écoulement des gaz d'échappement, présente, en amont d'un point de fuite possible (A), au moins un tronçon de tube (20) descendant du moteur à combustion interne (11).

9. Dispositif d'échappement selon les revendications 6 à 8, caractérisé en ce qu'en un point bas (21) du tuyau à gaz d'échappement (14) se raccorde un tuyau de drainage (22) qui, pendant le fonctionnement du moteur à combustion interne (11), est maintenu fermé par une valve (24), qui s'ouvre lors de la mise hors d'action du moteur à combustion interne.

10. Dispositif d'échappement selon la revendication 9, caractérisé en ce que dans le tuyau de drainage (22) est installé, à l'extérieur de la valve (24), un détecteur (23) de milieu d'échange thermique infiltré, qui, lorsqu'une infiltration de milieu d'échange thermique est constatée, empêche la remise en service du moteur à combustion interne (11) et/ou déclenche un signal d'avertissement.

11. Dispositif d'échappement selon la revendication 9 ou 10, caractérisé en ce que le tuyau de drainage (22) se rend à la valve (24) en spirale.

12. Dispositif d'échappement selon les revendications 9 à 11, caractérisé en ce que près de la sortie (25) du tuyau de drainage est installé, dans le compartiment d'installation du moteur à combustion interne (11), un contrôleur d'oxydes de carbone (26).

Fig. 1

Fig. 2

0 029 835

9